# EUROPEAN PATENT SPECIFICATION

(11) **EP 2 292 926 B1**
(45) Date of publication and mention of the grant of the patent: **24.10.2018**
(21) Application number: 09754010.8
(22) Date of filing: 28.05.2009
(51) Int. Cl.: F03D 1/06

(54) **WIND GENERATOR BLADE WITH HYPER-SUPPORTING ELEMENTS**
WINDGENERATORSCHAUFEL MIT AUFTRIEBSHILFE
PALE D'ÉOLIENNE À ÉLÉMENTS HYPERSUSTENTATEURS

(30) Priority: 30.05.2008 ES 200801632
(43) Date of publication of application: 09.03.2011
(73) Proprietor: Gamesa Innovation & Technology, S.L., 31621 Sarriguren (ES)
(72) Inventor: ROMERO SANZ, Ignacio, 31621 Sarriguren (ES); JIMENEZ DE LAGO, Mario, 31621 Sarriguren (ES)
(86) International application number: PCT/ES2009/070191
(87) International publication number: WO 2009/144356

(56) References cited:
- EP-A1- 2 031 241
- WO-A1-02/08600
- WO-A1-2005/105570
- WO-A1-2007/065434
- WO-A1-2007/105174
- CA-A1- 2 650 898
- DE-A1-102006 022 279
- US-A- 2 541 565
- US-A- 2 622 686
- US-A- 4 840 540
- US-A1- 2004 013 512

## Description

### FIELD OF THE INVENTION.

The aim of the present invention patent is a wind turbine blade with high-lift devices in the blade's root area, where there are two types of these elements: high-lift devices on the leading edge area and on the trailing edge area, so that said blade is aerodynamically optimized in its whole geometry to increase the wind turbine's energy production.

### BACKGROUND

Traditional wind turbine blades are joined to the hub in a cylindrical area known as the root, with a characteristic length of usually several meters. For most wind turbines, the function of this area is typically structural and does not significantly contribute to the wind turbine's production, as it is not aerodynamically optimized.

In the current state of the art, detachable elements in the root area, are described to improve the blade's performance. However, they are characterized by having a sharp trailing edge and a very large chord length on the joint with the root.

Thus for example, we have document WO 20071131937 that describes a blade for a wind-power generator with a detachable element on the trailing edge detachable from the blade itself.

Other examples of wind turbines with blades comprising high lift devices are known from e.g. WO02/08600, WO 2007/105174 and US 2622686.

### SUMMARY OF THE INVENTION.

To solve the above mentioned problem mentioned, the wind turbine blade with a high-lift device is presented, object of the present patent of invention. Said high-lift devices are of two different types, according to their position and use in the blade:
(i) High-lift device of the wind turbine trailing edge area;
(ii) High-lift device of the wind turbine leading edge area;

The high-lift device of the trailing edge is a fixed part, and not mobile like in other aerodynamic trailing edge devices related in the state of the art. The trailing edge of this element is thicker than known trailing edges, obtaining a bigger lift coefficient, which at the same time allows to make the detachable element with less total length (less chord). In other words, a shorter length or chord is obtained for the same lift, with greater trailing edge relative thickness. The device also allows to make a blade with less torsion, owing to having a greater stall angle in losses at high angles of attack. This high-lift device can be part of a one-piece blade and not only as an additional or detachable element.

The leading edge's high-lift device is selected amongst:
(i) a first leading edge high-lift device, slightly curved adapted to the blade root without inflection points on its outer surface;
(ii) a second leading edge high-lift device, with a smaller contact surface with the blade root and an inflection point on its outer surface, on the bottom, improving its operating performance;
(iii) a third leading edge high-lift device, with a pronounced outer profile, without inflection points on the surface and a contact area with the bottom root of the first and second devices' inflection points;
(iv) a fourth leading edge high-lift device, with a minimum contact area with the root, which at the same time creates a very pronounced inflection point on the outer surface of this fourth element, increasing the maximum lift coefficient;

The following technical advantages are obtained with the combined use of the two configurations (trailing edge and leading edge):
The wind turbine produces more energy, on improving the blades' aerodynamic coefficient.

Improved performance is obtained at lower ambient wind speeds, as the wind incidence angle has been improved.

The already installed blades can be used, and their production and transport is also improved and made easier.

### BRIEF DESCRIPTION OF DRAWINGS

A brief description of a series of illustrations is provided below in order to better understand the invention. These illustrations are expressly listed with an embodiment of the present invention and are presented as an illustrative, but not restrictive, example of the same.

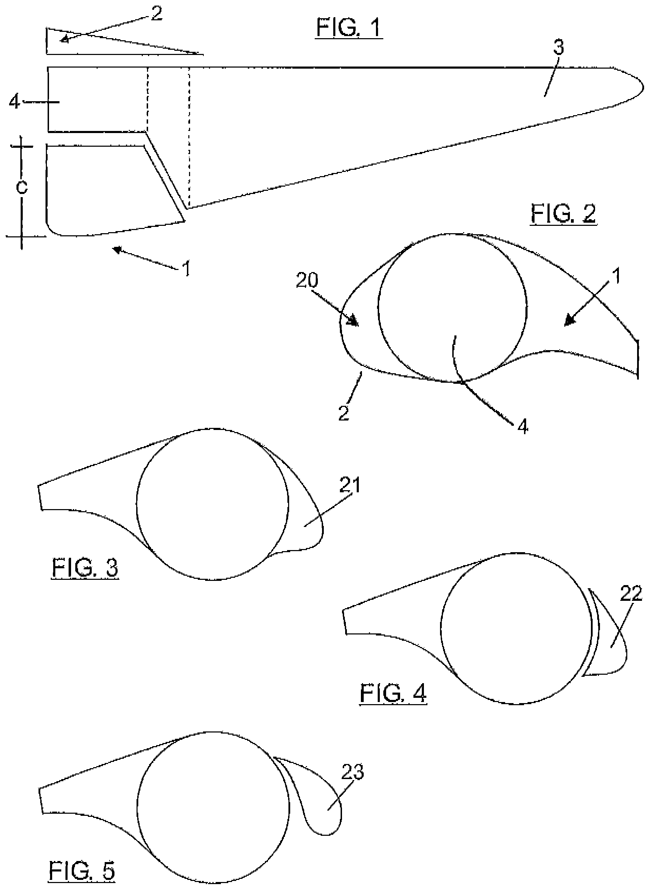

Figure 1 is a ground plan of a wind turbine blade with incorporated high-lift devices, as described in the present invention.
Figure 2 is a transversal section of the wind turbine blade with the first high-lift device of the leading edge installed.
Figure 3 is a transversal section of the wind turbine blade with the second high-lift device of the leading edge installed.
Figure 4 is a transversal section of the wind turbine blade with the third high-lift device of the leading edge installed.
Figure 5 is a transversal section of the wind turbine blade with the fourth high-lift device of the leading edge installed.
Figure 6 is a profile view of a wind turbine with installed high-lift devices, according to the present invention.

### DETAILED DESCRIPTION OF PREFERRED EMBODIMENTS

As can be observed in the attached figures, the wind turbine blade with high-lift devices comprises, at least, a trailing edge high-lift device (1) with a blunt end and chord (C) length of 6% to 30% less than a conventional profile for the same lift coefficient; and as the joint area radius is related to the blade's (3) root (4) radius, and to the thickness of this trailing edge high-lift device (1).

The first trailing edge high-lift device (1) can be detachable or integrated in a one-piece blade.

The leading edge's high-lift device (2) is selected amongst:
(i) a first leading edge high-lift device (20), slightly curved adapted to the blade (3) root (4) without inflection points on its outer surface;
(ii) a second leading edge high-lift device (21), with a smaller contact surface with the blade (3) root (4) and an inflection point on its outer surface, on the bottom;
(iii) a third leading edge high-lift device (22), with a pronounced outer profile, that maintains the clearance between it and the root so than a certain amount of air flow can pass between the intrados and extrados of the profile to energize the profile extrados' boundary layer and improve aerodynamic performance, where this third element (22) can also be mobile (rotary with respect to the center of the cylinder and known in aerodynamics as "slot") so that it is better adapted to operating conditions set by the ambient flow with the modification of CL and αₛₜₐₗₗ.
(iv) a fourth leading edge high-lift device (23), with a minimum contact area with the root (4), which at the same time favours a very pronounced inflection point in the outer surface of this fourth element (23), where, additionally, this fourth leading edge high-lift device (23) or slot, can be mobile (rotary, idem), so that the C_{L} and α_{STALL} ratio is optimized.

In the design of high-lift devices coupled to the wind turbine blade, both on the leading edge and trailing edge, as well as taking into account optimising the ration between C_{L} lift coefficient and the α_{STALL} angle of attack, a safety distance between the geometrical limits of the detachments and the machine itself should be taken into account.

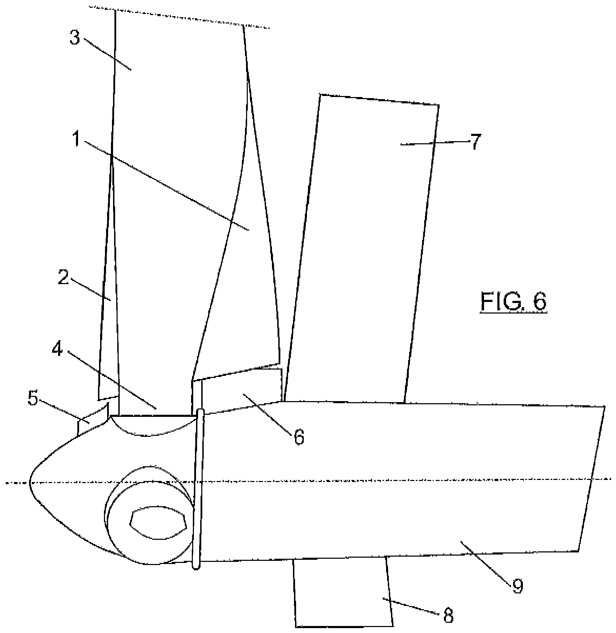

Figure 6 shows the embodiment of a complete wind turbine, with the tower (8), nacelle (9) and blade (3) and where the installation of these high-lift detachments is specifically shown on a wind turbine blade in which the safety distance of the different devices are graphically indicated: safety distance from the hub (5), safety distance from the nacelle (6) and safety distance from the tower (7), for a maximum chord length, so that a safety distance of around 300 mm from the nacelle, around 300 mm from the hub and around 400 mm from the tower is obtained.

## Claims

1. Wind turbine blade with high-lift devices **characterized in that** comprises at least a high-lift device (2) integrated at a leading edge of the blade root so as to allow relative movement between the high-lift device and the blade root and a high-lift device (1) integrated at a trailing edge of the blade root and providing continuity with a surface of the blade, the trailing edge high-lift device having blunt trailing edge and a cord length (C).

2. Wind turbine blade with high-lift devices, according to claim 1, **characterized in that** the high-lift device (2) at the leading edge is selected from the group consisting of:
(i) a first leading edge high-lift device (20),having a contact surface with the blade root (4) and an outer surface with a slight curvature;
(ii) a second leading edge high-lift device (21), having a contact surface with the blade root (4) and an outer surface with an inflection point;
(iii) a third leading edge high-lift device (22), having a contact surface with the blade root (4) and with a pronounced outer profile having a surface without inflection points;
(iv) a fourth leading edge high-lift device (23),having a minimum contact with the blade root (4) and an outer surface with a pronounced inflection point.

3. Wind turbine blade with high-lift devices, according to claim 1, **characterized in that** the high-lift device of the trailing edge (1) has a thickness that is selected such that the high-lift device of the trailing edge (1) has the same lift coefficient as a high-lift device that is thinner and that has a chord length that Is 5% to 30% greater than the chord length (C).

4. Wind turbine blade with high-lift devices, according to claim 1, **characterized in that** the high-lift device of the trailing edge (1) is integrated into the blade root (4) so as to provide continuity between the high-lift device of the trailing edge (1), the blade root (4) and the surface of the blade (3).

## Patentansprüche

1. Rotorblatt einer Windenergieanlage mit Hochauftriebsvorrichtungen, **gekennzeichnet dadurch, dass** es mindestens eine Hochauftriebsvorrichtung (2) enthält, die in der Vorderkante der Blattwurzel eingebaut ist, um eine relative Bewegung zwischen der Hochauftriebsvorrichtung und dem Rotorblatt und einer eingebauten Hochauftriebsvorrichtung (1) an einer Hinterkante der Blattwurzel zu ermöglichen und für Kontinuität mit einer Fläche des Rotorblatts zu sorgen, wobei die Hochauftriebsvorrichtung an der Hinterkante eine stumpfe Hinterkante und eine Sehnenlänge (C) hat.

2. Rotorblatt einer Windenergieanlage mit Hochauftriebsvorrichtungen gemäß Anspruch 1, **gekennzeichnet dadurch, dass** die Hochauftriebsvorrichtung (2) an der Vorderkante aus der Gruppe bestehend aus Folgendem gewählt wird:
(i) einer ersten Hochauftriebsvorrichtung (20) an der Vorderkante, die eine Kontaktfläche mit der Blattwurzel (4) und eine Außenfläche mit einer leichten Biegung hat;
(ii) einer zweiten Hochauftriebsvorrichtung (21) an der Vorderkante, die eine Kontaktfläche mit der Blattwurzel (4) und eine Außenfläche mit einem Wendepunkt hat;
(iii) einer dritten Hochauftriebsvorrichtung (22) an der Vorderkante, die eine Kontaktfläche mit der Blattwurzel (4) und einem ausgeprägtem Außenprofil sowie eine Fläche ohne Wendepunkte hat;
(iv) einer vierten Hochauftriebsvorrichtung (23) an der Vorderkante, die einen minimalen Kontakt mit der Blattwurzel (4) und eine Außenfläche mit einem ausgeprägten Wendepunkt hat.

3. Rotorblatt einer Windenergieanlage mit Hochauftriebsvorrichtungen gemäß Anspruch 1, **gekennzeichnet dadurch, dass** die Hochauftriebsvorrichtung an der Hinterkante (1) eine Stärke hat, die so gewählt wird, dass die Hochauftriebsvorrichtung an der Vorderkante (1) den selben Auftriebskoeffizienten hat, wie eine Hochauftriebsvorrichtung, die dünner ist, und dass sie eine Sehnenlänge hat, die 5 bis 30 % größer ist als die Sehnenlänge (C).

4. Rotorblatt einer Windenergieanlage mit Hochauftriebsvorrichtungen gemäß Anspruch 1, **gekennzeichnet dadurch, dass** die Hochauftriebsvorrichtung an der Hinterkante (1) in die Blattwurzel (4) integriert ist, sodass eine Kontinuität zwischen der Hochauftriebsvorrichtung der Vorderkante (1), der Blattwurzel (4) und der Rotorblattfläche (3) vorhanden ist.

## Revendications

1. Pale d'aérogénérateur avec des dispositifs hypersustentateurs **caractérisée en ce qu'**elle comprend au moins un dispositif hypersustentateur (2) intégré à un bord d'attaque du pied de pale de façon à permettre le mouvement relatif entre le dispositif hypersustentateur et le pied de pale et un dispositif hypersustentateur (1) intégré à un bord de fuite du pied de pale et assurant la continuité avec une surface de la pale, le dispositif hypersustentateur du bord de fuite ayant un ^{bord de} fuite franc et une longueur de corde (C).

2. Pale d'aérogénérateur avec des dispositifs hypersustentateurs selon la revendication 1, **caractérisée en ce que** le dispositif hypersustentateur (2) sur le bord d'attaque est sélectionné parmi le groupe suivant :
(i) un premier dispositif hypersustentateur (20) du bord d'attaque, ayant une surface de contact avec le pied de pale (4) et une surface extérieure avec une légère courbure ;
(ii) un second dispositif hypersustentateur (21) du bord d'attaque, ayant une surface de contact avec le pied de pale (4) et une surface extérieure avec un point d'inflexion ;
(iii) un troisième dispositif hypersustentateur (22) du bord d'attaque, ayant une surface de contact avec le pied de pale (4) et avec un profil extérieur prononcé ayant une surface sans points d'inflexion ;
(iv) un quatrième dispositif hypersustentateur (23) du bord d'attaque, ayant un contact minimal avec le pied de pale (4) et une surface extérieure avec un point d'inflexion prononcé.

3. Pale d'aérogénérateur avec des dispositifs hypersustentateurs selon la revendication 1, **caractérisée en ce que** l'hypersustentateur du bord de fuite (1) possède une épaisseur qui est sélectionnée de telle sorte que le dispositif hypersustentateur du bord de fuite (1) ait le même coefficient de portance qu'un dispositif hypersustentateur qui est plus fin et qui possède une longueur de corde entre 5 % et 30 % supérieure à la longueur de corde (C).

4. Pale d'aérogénérateur avec des dispositifs hypersustentateurs selon la revendication 1, **caractérisée en ce que** le dispositif hypersustentateur du bord de fuite (1) est intégré au pied de pale (4) de façon à assurer une continuité entre le dispositif hypersustentateur du bord de fuite (1), le pied de pale (4) et la surface de la pale (3).
